# EUROPÄISCHE PATENTANMELDUNG

(11) **EP 4 455 532 A1**
(43) Veröffentlichungstag der Anmeldung: **30.10.2024**
(21) Anmeldenummer: 23169590.9
(22) Anmeldetag: 24.04.2023
(51) Int. Cl.: F16L 55/165, B32B 1/08, B32B 5/02, D04B 21/20

(54) **KALIBRIERSCHLAUCH FÜR ROHRREPARATURANWENDUNGEN**

(71) Anmelder: Bondya GmbH, 4455 Zunzgen (CH)
(72) Erfinder: Boller, Daniel, 5064 Wittnau (CH)
(74) Vertreter: Meissner Bolte Partnerschaft mbB

(57) **Zusammenfassung**

Die vorliegende Erfindung betrifft textile Schläuche aus einem Gewebe, in denen das Gewebe eine Höchstzugkraft gemäß DIN 53857 von mehr als 2200 N und eine Luftdurchlässigkeit von weniger als 10 l/(dm² × Min) aufweist und in denen das Gewebe über die gesamte Länge des Schlauchs über überlappende Kanten des Gewebes mit mindestens einer Naht vernäht ist. Auf der außenliegenden Seite der Naht ist auf dem offenbarten Schlauch ist eine Kunststoffbahn aufgebracht, die sich über den Nahtbereich des Schlauchs erstreckt, so dass die Außenseite weitgehend glatt und die Stabilität der Konstruktion verbessert ist. Die vorliegende Erfindung betrifft weiterhin die Verwendung solcher textiler Schläuche zur Abdichtung von beschädigten Rohren, Kits zur Sanieren von Rohren, die solche textilen Schläuche umfassen, und Verfahren zur Sanierung und/oder Reparatur von Rohren, bei denen solche textilen Schläuche oder Kits verwendet werden.

## Beschreibung

Die vorliegende Erfindung betrifft textile Schläuche aus einem Gewebe, in denen das Gewebe eine Höchstzugkraft gemäß DIN 53857 von mehr als 2200 N und eine Luftdurchlässigkeit von weniger als 10 l/dm x Min aufweist und in denen das Gewebe über die gesamte Länge des Schlauchs über überlappende Kanten des Gewebes mit mindestens einer Naht vernäht ist. Auf der außenliegenden Seite der Naht ist auf dem offenbarten Schlauch ist eine Kunststoffbahn aufgebracht, die sich über den Nahtbereich des Schlauchs erstreckt. Die vorliegende Erfindung betrifft weiterhin die Verwendung solcher textiler Schläuche zur Abdichtung von beschädigten Rohren, Kits zur Sanieren von Rohren, die solche textilen Schläuche umfassen, und Verfahren zur Sanierung und/oder Reparatur von Rohren, bei denen solche textilen Schläuche oder Kits verwendet werden.

### Stand der Technik

Unterirdisch verlegte beschädigte Wasser- oder Abwasserrohre zu sanieren oder auszutauschen ist eine sehr kostspielige und aufwändige Angelegenheit. Wenn Arbeiten an unter Fahrbahnen verlegten Rohren durchgeführt werden müssen, ist dies zwangsläufig mit einer empfindlichen Störung des darüber laufenden Verkehrs verbunden. Rohre können zudem aufgrund einer Überbauung überhaupt nicht mehr von oben erreichbar. Ein Neubau auf anderer Trasse wäre hier sehr kostspielig.

Um dennoch beschädigte oder anderweitig sanierungsbedürftige Rohre ausbessern zu können Verfahren entwickelt, mit welchen ein Austausch der Rohre dadurch vermieden, dass eine schadhafte Rohrinnenwand durch Einziehen und Anlegen einer Auskleidung, wie z.B. eines Schlauches an die Rohrinnenwand, abgedichtet wird. Ein geringfügiger Querschnittsverlust wird hierbei in Kauf genommen.

Die EP 3 137 804 B1 beschreibt eine Auskleidung für die Sanierung von teilweise beschädigten Rohren für Trinkwasser oder Abwasser mit einer solchen Auskleidung. Das hierbei eingesetzte gewirkte Schlauchmaterial hat weder eine radiale noch eine axiale Festigkeit und legt sich deshalb beim Einbau in ein in der Regel defektes Rohr an dessen Innenwand an, wobei z. B. auch Ausbuchtungen kopiert werden. Dies kann bei der Sanierung zur neuerlichen Bildung von Blockaden und Hohlräumen führen, welche wiederum den Nachteil haben, dass sich hierdurch im Rohr neue Leckage- und Blockadeherde bilden.

Bei einem herkömmlichen Verfahren zum Sanieren eines Abwasserrohres wird ein Filzschlauch im sogenannten Umstülpverfahren eingebracht. Hierbei werden in das zu sanierende Rohr zunächst eine Gleitbahn oder ein Folienschlauch ("Preliner") als sog. verlorene Schalung und danach ein Filzschlauch ("Hauptliner") als Trägerschlauch, zusammen mit einem Kalibrierschlauch eingezogen. Weder der Preliner noch der Hauptliner können aber aufgrund ihrer Materialeigenschaften (unbewehrte Kunststofffolie und Filzgewebe) radiale oder axiale Kräfte aufnehmen. Die Kombination aus Hauptliner und Kalibrierschlauch ist in der Aufnahme axialer Kräfte begrenzt. Der herkömmliche Preliner ist aufgrund seiner Materialstruktur luftundurchlässig. Alle Komponenten werden nacheinander im Umstülpverfahren eingebaut. Hierbei erfolgt der Einzug von Wartungsschacht zu Wartungsschacht oder von einem Wartungsschacht aus zu einem "blinden" Ende hin (d. h. Einbau in ein Leitungsende ohne Zugang, sog. Open-End-Verfahren). Nach dem Einbau wird das System mit Druck bis etwa 0,8 bar beaufschlagt und dabei expandiert. Danach wird das im Hauptliner enthaltene Kunstharz ausgehärtet. Dieses System hat ebenfalls den Nachteil, dass die schadhafte Kontur der Innenwand des zu sanierenden Rohrs kopiert wird, mit den oben geschilderten negativen Folgen. Da das System kaum axiale Kräfte aufnehmen kann, werden unregelmäßige Querschnitte des Altrohres nachgeformt. Der Filzschlauch folgt der Form des Altrohres mit allen dessen Deformationen.

Bei einem anderen bekannten Verfahren, dem sog. Hybridliner-Verfahren wird ein Hybridliner, d.h. ein mit Glasfasermatten verstärkter Filzschlauch, zum Einsatz. Der Hybridliner wird in einen verstärkten, licht- und luftundurchlässig ausgebildeten Folienschlauch (Preliner) eingezogen, und mit diesem zusammen mit dem Kalibrierschlauch in das schadhafte Rohr eingezogen. Die Versorgung bzw. Tränkung des Hybridliners mit Kunstharz erfolgt vor Ort auf der Baustelle. Die Anordnung wird von Schacht zu Schacht eingezogen und mit Hilfe des Kalibrierschlauchs radial ausgedehnt. Danach wird das im Hybridliner befindliche Kunstharz ausgehärtet.

Der genannte Hybridliner besitzt nach der Aushärtung aufgrund der integrierten Glasfaserarmierung mit höherem E-Modul und höherer Biegezugfestigkeit eine wesentlich höhere Widerstandsfähigkeit als ein einfacher Filzschlauch. Wegen der Steifigkeit der integrierten Glasfasermatten ist hier das Umstülp-Verfahren allerdings nicht möglich. Der Hybridliner kann nur durch knickfreies Einziehen in eine Rohrleitung eingebaut werden und ist wegen der beschränkten Biegbarkeit der Glasfasern nur sehr eingeschränkt bogengängig. Hierdurch ist sein Einbau, der auch nur zwischen frei zugänglichen Wartungsschächten möglich ist, aufwändiger und kostspieliger. Es ist eine Aufgabe der Erfindung, eine Anordnung und ein Verfahren vorzuschlagen, mit welchen die aus dem Stand der Technik bekannten Nachteile vermieden oder zumindest stark verringert werden.

Die WO 2020/244883 A1 beschreibt ein System zur Sanierung eines Rohrs mit einer an der Innenwand des Rohrs aufliegende Gewebeschicht, einer darunter positionierten Filzschicht und einer inneren Gewebeschicht, die mit einem Trennmittel, insbesondere in Form von Silikon, beschichtet ist. In dem in der WO 2020/244883 A1 beschriebene System sind die Gewebeschichten durch Textilschläuche gebildet, die in einem Stück gewebt sind (one piece woven) und so keine Nähte oder Schweißnähte aufweisen, die potentielle Schwachstellen der Schläuche bilden können. Ein Nachteil dieses Systems besteht leider darin, dass die auf dieser Technologie beruhenden verfügbaren Schläuche keine ausreichende Reißfestigkeit aufweisen, so dass es bei der Sanierung eines Rohrs zu einer Schädigung der Schläuche kommen kann, die das Sanierungsergebnis beeinträchtigen. Ein weiterer Nachteil besteht darin, dass die Schläuche mit Spezialmaschinen und nicht in großen Bahnen, hergestellt werden, was die Schläuche relativ teuer macht.

Vor diesem Hintergrund besteht ein Bedarf für ein Rohrsanierungssystem, das auf der einen Seite kostengünstig hergestellt werden kann, und auf der anderen Seite ausreichend reißfest und belastbar sind, so dass im Rahmen der Verwendung des Systems zur Sanierung von Rohren keine Fehlstellen, Beschädigungen oder Löcher entstehen.

Die vorliegende Erfindung befasst sich mit diesem Bedarf.

### Beschreibung der Erfindung

In den dieser Erfindung zu Grunde liegenden Untersuchungen wurde überraschend festgestellt, dass Schläuche mit einer ausreichenden Stabilität aus Gewebe hergestellt werden können, das gemeinhin als "Airbag-Gewebe" bezeichnet wird, und das sich durch eine Luftdurchlässigkeit von weniger als 10 l/(dm² x Min) (bestimmt gemäß DIN EN ISO 9237:1995, bei einem Prüfdruck von 500 Pa) und eine Höchstzugkraft von mindestens 2200 N/5cm auszeichnet. Für die Herstellung von textilen Schläuchen aus einem solchen Gewebe können gegenüberliegende Kanten von Bahnen des Gewebes mit einer Naht aneinander befestigt werden. Auf dieser Naht wird anschließend eine Kunststoffbahn angebracht, die einerseits Zugkräfte auf die Naht großflächig auf den Schlauch verteilt, und andererseits vorstehende Bestandteile der Naht abdeckt und vor einer Beschädigung durch Reibung mit anderen Bestandteilen des Reparatursystems schützt. Diese Konstruktionsweise ist insbesondere für "Kalibrierschläuche", die als innerster Bestandteil des Reparatursystems eingesetzt werden, und nach dem Verfestigen eines Kunstharzes wieder aus dem Rohr entfernt werden, mit wesentlichen Vorteilen verbunden.

Gemäß einem ersten Aspekt betrifft die vorliegende Erfindung demzufolge einen textilen Schlauch aus einem Gewebe mit einer Höchstzugkraft gemäß DIN 53857 von mindestens 2200 N/5cm und einer Luftdurchlässigkeit von weniger als 10 l/(dm² x Min), wobei das das Gewebe über die gesamte Länge des textilen Schlauchs über überlappende Kanten des Gewebes mit mindestens einer Naht verbunden ist und auf der außenliegenden Seite der Naht eine Kunststoffbahn angebracht ist, die sich über den Nahtbereich des Schlauchs erstreckt.

Um der Schlauchkonstruktion eine besonders vorteilhafte Haltbarkeit zu vermitteln, ist es zweckmäßig, wenn die überlappenden Kanten des Gewebes mit mindestens zwei Nähten verbunden sind, wobei sich drei Nähte als optimaler Kompromiss zwischen Verarbeitungsaufwand und Festigkeit erweisen haben; deshalb ist eine solche Ausgestaltung besonders bevorzugt.

Wenn der Schlauch mehrere Nähte aufweist, sind diese möglichst in einem Abstand zueinander angebracht, der so groß ist, dass die Stabilität des Gewebes durch die Nähte nicht beeinflusst wird, und dass auf der anderen Seite keine über das erforderliche Maß hinausgehende Überlappung der überlappenden Kanten des Gewebes vorhanden ist, die zu einem hohen Materialaufwand führt. Aus diesen Gründen ist es bevorzugt, wenn die mehreren Nähte in einem Abstand im Bereich von 0,1 bis 1 cm und weiter bevorzugt 0,2 bis 0,6 cm zueinander angebracht sind.

Hinsichtlich des Materials, aus dem das Gewebe gebildet ist, unterliegt die vorliegende Erfindung keinen relevanten Beschränkungen, mit der Maßgabe, dass das Material eine Höchstzugkraft gemäß DIN 53857 von mindestens 2200 N/5cm aufweist. Dabei kennzeichnet die Angabe "5cm" dem Umstand, dass die Höchstzugkraft für ein Band mit einer Breite von 5 cm bestimmt wird.

Das Erfordernis einer Höchstzugkraft in dem angegebenen Bereich ist dann erfüllt, wenn entweder diese Höchstzugkraft in Kettrichtung oder in Schussrichtung des Gewebes erreicht wird. Für den erfindungsgemäßen Schlauch ist es bevorzugt, wenn diese Höchstzugkraft durch diejenige Richtung bereitgestellt wird, die im Schlauch in Umfangsrichtung angeordnet ist.

Materialien, aus denen Gewebe mit den geforderten Eigenschaften hergestellt werden können, und die kommerziell verfügbar sind, sind z.B. Polyamid- oder PET(= Polyethylenterephthalat)-Gewebe, so dass solche Gewebe für die Herstellung der erfindungsgemäßen Schläuche bevorzugt sind. Ganz besonders bevorzugt sind Polyamidgewebe, und insbesondere Polyamidgewebe auf Basis von Polyamid 6, Polyamid 6.6 oder Polyamid 4.6.

Hinsichtlich der Feinheit der für die Gewebe herangezogenen Garne unterliegt die vorliegende Erfindung keinen relevanten Beschränkungen, mit der Maßgabe, dass die Feinheit einerseits die erforderlichen Festigkeiten bereitstellen können muss, und andererseits nicht mehr als nötig Material eingesetzt werden sollte. Als geeignete Größenordnungen für die Feinheit kann für die Schuss- und Kettfäden ein Bereich von 200 bis 700 dtex und insbesondere bis 230 bis 500 dtex angegeben werden, zu einem gewissen Maß abhängig von der Feinheit ist das Flächengewicht des Gewebes, das für das Gewebe, aus dem der textile Schlauch gebildet ist, bevorzugt im Bereich von 120 bis 400 g/m² und insbesondere im Bereich von 140 bis 320 g/m² eingestellt werden kann.

Um ein Anhaften von Kunstharz bei der Verwendung der angegeben textilen Schläuche in einem vorstehend beschriebenen Rohrsanierungssystem zu vermeiden, ist es zweckmäßig, wenn die Außenseite des erfindungsgemäßen Textilschlauchs mit einer haftunterdrückenden Beschichtung modifiziert ist. Hierfür eignet sich insbesondere eine Silikonbeschichtung. Die "Außenseite" des Schlauchs bezeichnet dabei diejenige Seite, auf der die Kunststoffbahn angebracht ist.

Wie erwähnt weist das Gewebe, aus dem der erfindungsgemäße textile Schlauch gebildet ist, eine Höchstzugkraft gemäß DIN 53857 von mindestens 2200 N/5cm auf. Weiter bevorzugt beträgt die Höchstzugkraft mindestens 2500 N/5cm und insbesondere mindestens 2700 N/5cm und/oder höchstens 6000 N/5cm, insbesondere höchstens 5000 N/5cm und noch weiter bevorzugt höchstens 4500 N/5cm. Weitere für das Gewebe vorteilhafte Eigenschaften sind die Weiterreißkraft und die Höchstzugkraftdehnung. Für die Höchstzugkraftdehnung ist es dabei bevorzugt, wenn diese mehr als 15% und/oder höchstens 70% beträgt. Noch weiter bevorzugt ist eine Höchstzugkraftdehnung von mindestens 20% und insbesondere mindestens 25% und/oder höchstens 60% und insbesondere höchstens 50%. Für die Weiterreißkraft kann ein Rahmen von 80 bis 300 N und insbesondere 100 bis 250 N als besonders geeignet angegeben werden. Die Höchstzugkraftdehnung und die Weiterreißkraft sind dabei gemäß DIN 53857, bzw. DIN 53859 zu bestimmen, wobei für alle hier angegeben Normen die zum Anmeldedatum gültige Norm maßgeblich ist. Weiterhin weist das Gewebe, bzw. das Polymer, aus dem das Gewebe gebildet ist, bevorzugt einen Schmelzpunkt von mindestens 120°C und bevorzugt von mindestens 150°C auf.

Die Kunststoffbahn ist zweckmäßig aus einem Material gebildet, das gegenüber einem für ein Rohrsanierungssystem verwendeten Kunstharz ausreichend beständig und gegenüber diesem möglichst unreaktiv ist. Als geeignete Materialien sind hierbei insbesondere Polyolefine, Polysilikon oder auf Polyurethan zu nennen. Geeignete Polyolefine sind z.B. Polyethylen oder Polypropylen. Ganz besonders geeignet sind Polysilikon oder Polyurethan, da diese Materialien entweder *per se* schon Trennmitteleigenschafen aufweisen, oder besonders temperaturbeständig sind, so dass sie bei einer Härtung eines Kunstharzes durch Wärmeeinwirkung nicht beschädigt werden können.

Die Kunststoffbahn weist eine Breite auf, die sicherstellt, dass vorhandenen Nähte im Schlauch durch die Kunststoffbahn abgedeckt werden, und ein gewisser Überstand vorhanden ist, damit die Kunststoffbahn an ihren Kanten sicher auf dem textilen Schlauch befestigt werden kann. Bevorzugt ist es dabei, dass sich die Kunststoffbahn über eine Breite im Bereich von 0,5 bis 3 cm und bevorzugt 1 bis 2 cm über die Naht oder Nähte erstreckt, mit denen die Kanten des Schlauchs verbunden sind.

Die Kunststoffbahn weist eine Dicke auf, die der Schicht die nötige Beständigkeit vermittelt. Als günstiger Bereich für die Dicke kann ein Rahmen im Bereich von 0,1 bis 1,5 mm und bevorzugt 0,2 bis 0,8 mm angegeben werden.

Die Kunststoffbahn kann auf der Außenseite des erfindungsgemäßen textilen Schlauchs mit einem Haftmittel, wie einem Klebstoff befestigt sein, oder kann direkt auf die Außenseite aufgebracht sein, in dem z.B. eine Außenseite der Kunststoffbahn angeschmolzen oder anderweitig erweicht und auf den Schlauch laminiert wird.

Der erfindungsgemäße textile Schlauch weist vorzugsweise einen standardmäßig verbauten Rohren angepassten Durchmesser auf. Da Reparatursysteme, die auf der beschriebenen Technologie beruhen, bei kleineren Rohrdurchmessern aufgrund der stärkeren Krümmung sicher eingesetzt werden können, ist es bevorzugt, wenn der textile Schlauch einen Durchmesser im Bereich von 5 bis 30 cm und bevorzugt 8 bis 20 cm aufweist.

Hinsichtlich der Vernähung der Gewebekanten zur Bildung des Schlauchs unterliegt die vorliegende Erfindung ebenfalls keine relevanten Beschränkungen. In einer Ausführungsform können die Nähte als Nähte mit Doppelsteppstichen, Kettenstichen oder Doppelkettenstichen ausgebildet sein, wobei es für diesen Fall bevorzugt ist, wenn die Nähte mit einer Stichdichte im Bereich von 1,5 bis 6 Stichen/cm und insbesondere 2,5 bis 5 Stichen pro cm ausgebildet sind.

Das Fadenmaterial bzw. Nähgarn, das für die Verbindung der überlappenden Kanten des Gewebes herangezogen wird, unterliegt ebenfalls keine relevanten Beschränkungen, so lange das Material selbst ausreichend stabil ist. Als besonders zweckmäßig kann es aber angegeben werden, wenn das Fadenmaterial bzw. Nähgarn eine Gesamtfeinheit im Bereich von 1000 bis 3000 dtex und bevorzugt 1200 bis 2500 dtex und/oder eine Höchstzugkraft von mehr als 50 N und bevorzugt im Bereich von 70 bis 200 N aufweist.

Ein weiterer Aspekt der vorliegenden Erfindung betrifft die Verwendung eines textilen Schlauchs, wie er im vorstehenden beschrieben wurde, als Kalibrierschlauch für die Abdichtung von beschädigten Rohren, wobei der Kalibrierschlauch genutzt wird um einen in das beschädigte Rohr eingeführten Verbund aus einem äußeren Schlauch und einer mit einer Kunstharzmischung getränkten Filzschicht an die Innenwände des beschädigten Rohrs zu drücken. Dies erfolgt zweckmäßig dadurch, dass der textile Schlauch mit einem Gas, insbesondere mit Luft, gefüllt wird.

Der äußere Schlauch in dieser Verwendung ist zweckmäßig durch ein wasserundurchlässiges Material gebildet, z.B. einen Kunststoff, der äußere Schlauch kann aber auch durch ein Gewebe gebildet sein. Zudem ist es möglich, dass der äußere Schlauch ein wasserundurchlässiger Gewebeschlauch ist, bei dem eine Gewebe mit einem wasserundurchlässigen Material kombiniert ist.

Ein weiterer Aspekt der Erfindung betrifft ein Kit zum Sanieren eines Rohrs, insbesondere eines Kanalrohrs, das einen textilen Schlauch A, der dem im vorstehenden Beschriebene textilen Schlauch entspricht, und einen Schlauch B mit einer äußeren Gewebeschicht, die bevorzugt wassersundurchlässig ist, und einer inneren Schicht, die eine Filzschicht und eine darin imprägnierte Kunstharzmischung enthält, umfasst, wobei der Außendurchmesser des textilen Schlauchs A so auf den Innendurchmesser des Schlauchs B abgestimmt ist, dass der textile Schlauch A, wenn er vollständig mit einem Gas gefüllt ist, an der Innenschicht des Schlauchs B anliegt. D.h. der Außendurchmesser des textilen Schlauchs A ist geringfügig kleiner als der Innendurchmesser des Schlauchs B, der sich dadurch ergibt, dass die Filzschicht an die äußere Gewebeschicht angedrückt wird, wenn der textile Schlauch A mit Gas gefüllt wird.

Der äußere Schlauch in den beiden vorbeschriebenen Aspekten ist bevorzugt aus Polyurethan gebildet oder enthält Polyurethan zur Ausbildung einer kontinuierlichen Schicht, in die gegebenenfalls ein Gewebe eingebettet ist. Alternativ oder zusätzlich dazu weist der äußere Schlauch ein Flächengewicht im Bereich von 170 bis 500 g/m² und bevorzugt 200 bis 300 g/m² auf.

Das Fasermaterial, aus dem die Filzschicht gebildet ist, ist zweckmäßig ein in konventionellen Rohrreparatursystemen, wie sie für den Stand der Technik oben angegeben sind, übliches Material. Die Fasern des Fasermaterials können aus einem organischen Werkstoff, wie einem thermoplastischen Polymer, insbesondere in Form von Polyester, oder einem anorganischen Material, z.B. Glas gebildet sein. In einer bevorzugten Ausführungsform beruht das Fasermaterial der Filzschicht auf Glasfasern und ist insbesondere ein Glasfaserfilz. In einer weiteren bevorzugten Ausführungsformberuht beruht das Fasermaterial auf Polyester und weist vorzugsweise ein Gewicht im Bereich von 400 bis 800 g/m², insbesondere 500 bis 700 g/m² auf. Unabhängig von dem Material, aus dem die Filzschicht gebildet ist, weist diese bevorzugt ein Porenvolumen im Bereich von 85 bis 97% und besonders bevorzugt im Bereich von 90 bis 95% auf.

Wenn das erfindungsgemäße aushärtbare System eine Faserverbund-Schicht aufweist, die auf Kunststofffasern, insbesondere in Form von Polyesterfasern, beruht, kann die Faserverbundschicht mit einer Polyurethanschicht kaschiert sein, die auf der der äußeren Kunststoffschicht entgegengesetzten Seite der Faserverbundschicht angeordnet ist. Derart ausgestattete Schauchsysteme werden beispielsweise unter der Bezeichnung "Brawoliner^{®}" von der Firma Brawo Systems vertrieben.

Bei dem Kunstharz handelt es sich meist um ein aushärtbares Material, wobei die Aushärtung bevorzugt durch das Einbringen von Wärme, Dampf oder Licht initiierbar ist. Damit das Kunstharz in Zwischenräume des Filzes eingebracht werden kann ist es zweckmäßig, wenn das Kunstharz eine für eine Imprägnierung von Fasermaterialien ausreichend geringe Viskosität aufweist (wobei diese Viskosität gegebenenfalls auch durch die Zugabe eines Lösungsmittels oder durch eine Imprägnierung bei erhöhter Temperatur erreicht werden kann). In diesem Zusammenhang besonders geeignete Kunstharze sind z.B. Polyester-Harze (UP-Harze), Vinylesterharze (VE) und Epoxyharze. Ganz besonders bevorzugt ist das Harz ein zwei Komponenten Epoxyharz mit einer ersten Komponente, die überwiegend aus Epoxykomponenten einschließlich Diglycidylether von Bisphenol A, Bisphenol F oder Gemischen von Bisphenol A und F, sowie Oligomerisierungsprodukte solcher Bisphenole und Glycerin, gebildet ist, und einer zweiten Komponente, die Diamine umfasst, die bevorzugt mindestens eines von Aminoethylpiperazin, Kondensationsprodukten von Polypropylenglycol und Aminopropanol (1-Aminopropan-2-ol und/oder 1-Aminopropan-3-ol), 2-Methylpentane-1,5-diamin, Isophorondiamine, 2,4,6-tris(Dimethylaminomethyl)phenol, Trimethylhexan-1,6-diamin, 3,6-Diazaoctan-1,8-diamin und m-Phenylenebis(methylamin) enthalten oder aus diesen Verbindungen gebildet ist. Kommerziell erhältliche zweikomponentige Epoxyharze, die im Kontext der Erfindung als Kunstharze verwendet werden können, sind beispielsweise die von der Bodus GmbH und den Bezeichnungen EP 50 und EP 80 vertriebenen Harzsysteme.

Das Kunstharz kann zusätzlich weitere Komponenten und Additive zur Eigenschaftssteuerung enthalten, einschließlich, aber nicht beschränkt auf Katalysatoren, Hitze- und/oder Lichtstabilisatoren, Thixotropiermittel, Weichmacher, Lösungsmittel, mineralische oder organische Füllstoffe, Treibmittel, Farbstoffe und Pigmente.

Ein noch weiterer Aspekt der vorliegenden Erfindung betrifft Verfahren zum Sanieren eines Rohrs, insbesondere eines Abwasserrohrs, vorzugsweise unter Verwendung eines Kits wie es vorstehend beschrieben wurde, das die folgenden Schritte aufweist:
a) Ausbildung einer Innenauflage **S1** in einem Rohr, wobei die Innenauflage eine mit der Innenwand des Rohrs in Kontakt stehende Gewebeschicht **S11,** die bevorzugt wassersundurchlässig ist, und eine innere Schicht, die einen Filzschlauch **S12** und eine Kunstharzmischung enthält, umfasst,
b) Einbringen eines textilen Schlauchs **S2,** der dem vorstehend beschrieben textilen Schlauch entspricht, und der mit einem an der Kunstharzmischung nicht anhaftenden Trennmittel, vorzugsweise mit Silikon, beschichtet ist, in das Innere der Innenauflage **S1,**
c) im Wesentlichen luftdichtes Abschließen des Textilschlauchs **S2,**
d) Aufblasen des Textilschlauchs **S2,**
e) dauerndes radiales Andrücken des Textilschlauchs **S2** und der Innenauflage **51** an das Rohr,
f) Aushärtenlassen der aushärtbaren Kunstharzmischung,
g) Entfernen des Textilschlauchs **S2** aus dem Inneren der Innenauflage **S1.**

Die Gewebeschicht **S11** kann als gewebeverstärkter Schlauch ausgebildet sein, d.h. als Schlauch, der eine kontinuierlich Matrix und ein darin eingebettetes Gewebe aufweist. Alternativ dazu ist es möglich, dass anstelle der Gewebeschicht nur eine kontinuierliche Matrix ohne Gewebe vorhanden ist (d.h. als Gleitbahn oder Folienschlauch). In diesem Fall kann der Schlauch ist in einem Stück (ohne Verbindung von Kanten) ausgebildet sein. Eine Gewebeschicht kann entweder als One piece woven ausgebildet sein, oder kann zweckmäßig mit einer Naht ausgebildet sein, insbesondere in Kombination mit einer Kunststoffbahn, wie es vorstehend für den erfindungsgemäßen Schlauch beschrieben wurde.

Für das Einbringen der Gewebe **S11,** oder einer dieser Schicht entsprechenden Schicht, die nicht aus einem Gewebe gebildet ist, ist es unerheblich, ob die Schicht separat von dem Filzschlauch in das Rohr eingebracht wird, und der Filzschlauch **S12** zusammen mit der Kunststoffmischung unabhängig von der Schicht **S11** in einem zweiten Schritt in das Gewebe eingebracht wird, oder ob die Schichten **S11** und **S12** als Verbund (mit loser bzw. allein durch das nicht gehärtete Kunstharz gebildete Verbindung) in das Rohr eingebracht wird. Besonders günstig ist es dabei, wenn Filzschicht **S12** und Schicht **S11** vor dem Einbringen in das Rohr so aufeinander angebracht werden, dass die Filzschicht die äußere Schicht bildet und die Schichten Folge beim Einbringen in das Rohr durch umstülpen des Verbunds umgekehrt wird. In diesen Fall kann das Kunstharz auf der Baustelle auf die Filzschicht aufgebracht und in die Filzschicht eingearbeitet werden, wobei eine Kontaminierung anderer Komponenten durch das Kunstharz weitgehend vermieden werden kann. Das Verfahren kann auch bei Rohren Anwendung finden, bei denen zum Zeitpunkt der Montage nur ein einseitiger Zugang möglich ist (Open-End-Technik).

Bei den Rohren, die im Rahmen des beschriebenen Verfahrens, saniert oder abgedichtet werden, handelt es sich bevorzugt um Kanal- oder Abwasserrohre.

Eine Vorrichtung, mit das erfindungsgemäße Verfahren durchgeführt werden kann, ist z.B. in der WO 2022/171622 A1 beschrieben, deren relevanter Inhalt hiermit durch Bezugnahme in die Anmeldung aufgenommen ist.

In einer vorteilhaften Ausgestaltung des erfindungsgemäßen Verfahrens wird der textile Schlauch **S12** während der Schritte f) und g) in seinem Inneren mit Wärme, Dampf oder Licht beaufschlagt wird. Bei luftdicht abgeschlossenem zweiten Textilschlauch kann über eine darin angeordnete Wärme-, Dampf- oder Lichtquelle das Aushärten der Kunstharzmischung vorteilhafterweise unterstützt und beschleunigt werden.

In weiteren vorteilhaften Ausgestaltung des erfindungsgemäßen Verfahrens wird der textil Schlauch bei Schritt e) auf einen Druck von bis zu 4 bar aufgeblasen, so dass der erste Schlauch fest an das Rohr, insbesondere Abwasserrohr gedrückt wird. Diese Vorgehensweise ermöglicht die Herstellung nahezu perfekter Rohrauskleidungen, die außerordentlich dicht sind. In dieser Prozessstufe steht der textile Schlauch bereits so unter Druck, dass bis zum Aushärten des Kunstharzes kein Grundwasser oder ähnliches von außen in die Auskleidung gelangen kann.

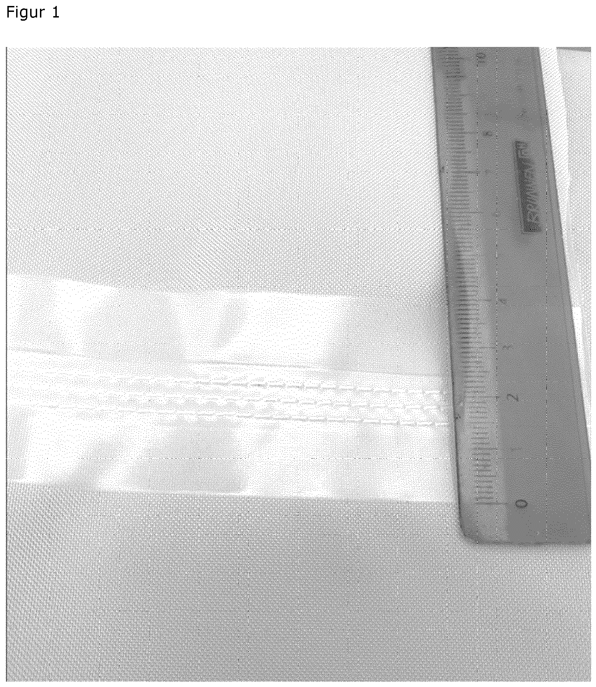

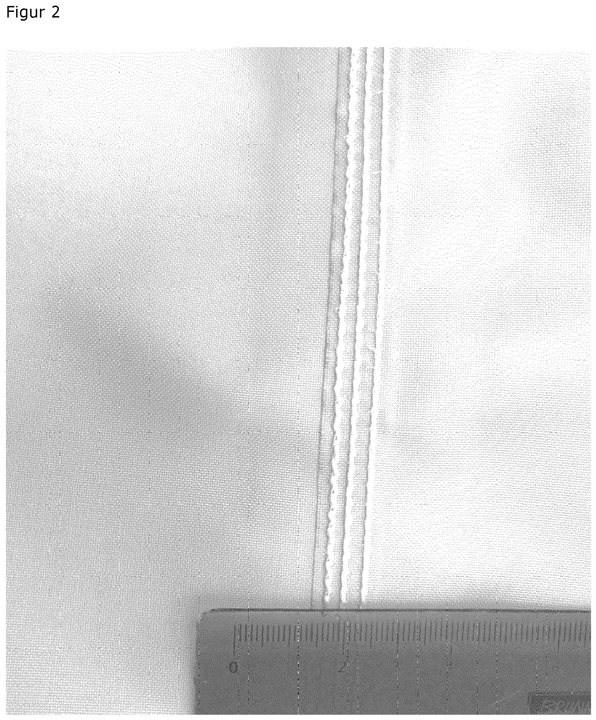

Eine erfindungsgemäße Textilschlauchkonstruktion ist in den Figuren 1 (Vorderseite) und 2 (Rückseite) dargestellt. Die "Vorderseite" bezeichnet hier die Seite, über die der Schlauch an einer Filzschicht anliegen kann, die Oberfläche dieser Schicht ist im abgebildeten Schlauch silikonisiert. Der Schlauch weist eine Flachbreite von 20 cm auf und ist aus einem Airbaggewebe gebildet, dass mit einer überlappenden Kante und drei Nähten zu einem Schlauch verbunden wurde. Auf der Vorderseite des Schlauchs ist über den Nähten ein Polyurethanstreifen mit einer Breite von etwa 4 cm angebracht, so dass die Nähte hierzu mittig positioniert sind und der Streifen um etwa 1.5 cm in Breitenrichtung über die Nähte hinaussteht. Die Nähte sind in einem Abstand von etwa 3 mm zueinander angeordnet.

## Patentansprüche

1. Textiler Schlauch aus einem Gewebe mit einer Höchstzugkraft gemäß DIN 53857 von mindestens 2200 N/5cm und einer Luftdurchlässigkeit von weniger als 10 l/dm x Min, **dadurch gekennzeichnet, dass** das Gewebe über die gesamte Länge des Schlauchs über überlappende Kanten des Gewebes mit mindestens einer Naht verbunden ist und auf der außenliegenden Seite der Naht eine Kunststoffbahn angebracht ist, die sich über den Nahtbereich des Schlauchs erstreckt.

2. Textiler Schlauch gemäß Anspruch 2, wobei die überlappenden Kanten des Gewebes mit mindestens zwei Nahten, und bevorzugt mit drei Nähten vernäht sind, die bevorzugt in einem Abstand im Bereich von 0,1 bis 1 cm und weiter bevorzugt 0,2 bis 0,6 cm zueinander angebracht sind.

3. Textiler Schlauch gemäß Anspruch 1 oder 2, wobei das Gewebe ein Polyamid- oder PET-Gewebe ist und bevorzugt auf Fasern auf Basis von Polyamid 6, Polyamid 6.6, Polyamid 4.6 oder Polyethylenterephthalat beruht.

4. Textiler Schlauch gemäß mindestens einem der Ansprüche 1 bis 3, wobei das Gewebe Schuss- und Kettfäden mit einer Feinheit im Bereich von 200 bis 700 dtex und insbesondere bis 230 bis 500 dtex und/oder eine Flächenmasse im Bereich von 120 bis 400 g/m² und insbesondere im Bereich von 140 bis 300 g/m² aufweist.

5. Textiler Schlauch gemäß mindestens einem der vorangehenden Ansprüche, wobei der Schlauch auf seiner Außenseite mit einer haftunterdrückenden Beschichtung, und bevorzugt mit einer Silikonbeschichtung modifiziert ist

6. Textiler Schlauch gemäß mindestens einem der vorangehenden Ansprüche, wobei die Kunststoffbahn auf einem Polyolefin, Polysilikon oder auf Polyurethan als Kunststoff beruht, und/oder wobei sich die Kunststoffbahn über eine Breite im Bereich von 0,5 bis 3 cm und bevorzugt 1 bis 2 cm über die Naht oder Nähte erstreckt, mit denen die Kanten des Schlauchs verbunden sind.

7. Textiler Schlauch gemäß mindestens einem der vorangehenden Ansprüche, wobei der Schlauch einen Durchmesser im Bereich von 5 bis 30 cm und bevorzugt 8 bis 20 cm aufweist.

8. Textiler Schlauch gemäß mindestens einem der vorangehenden Ansprüche, wobei die Nähte mit Doppelsteppstichen oder Doppelkettenstichen und bevorzugt mit Doppelkettenstichen ausgeführt sind, besonders bevorzugt mit eine Stichdichte im Bereich von 1,5 bis 6 Stichen/cm und insbesondere 2,5 bis 5 Stichen pro cm.

9. Textiler Schlauch gemäß mindestens einem der vorangehenden Ansprüche, wobei die Nähte aus einem Nähgarn mit einer Gesamtfeinheit im Bereich von 1000 bis 3000 dtex und bevorzugt 1200 bis 2500 dtex gebildet sind und/oder eine Höchstzugkraft von mehr als 50 N und bevorzugt im Bereich von 70 bis 200 N aufweisen.

10. Verwendung eines Textilschlauchs gemäß einem der Ansprüche 1 bis 6 als Kalibrierschlauch für die Abdichtung von beschädigten Rohren, wobei der Kalibrierschlauch genutzt wird um einen in das beschädigte Rohr eingeführten Verbund aus einem äußeren Schlauch und einer mit einer Kunstharzmischung getränkten Filzschicht an die Innenwände des beschädigten Rohrs zu drücken.

11. Kit zum Sanieren eines Rohrs, das einen textilen Schlauch A gemäß einem der Ansprüche 1 bis 9 und einen Schlauch B mit einer äußeren Gewebeschicht, die bevorzugt wassersundurchlässig ist, und einer inneren Schicht, die eine Filzsschicht und eine Kunstharzmischung enthält, umfasst, wobei der Außendurchmesser des textilen Schlauchs A so auf den Innendurchmesser des Schlauchs B abgestimmt ist, dass der textile Schlauch A, wenn er vollständig mit einem Gas gefüllt ist, an der Innenschicht des Schlauchs B anliegt.

12. Kit zum Sanieren eines Rohrs gemäß Anspruch 8, wobei die Kunstharzmischung aushärtbar ist und wobei die Aushärtung bevorzugt durch das Einbringen von Wärme, Dampf oder Licht initiierbar ist.

13. Verfahren zum Sanieren eines Rohrs, insbesondere eines Abwasserrohrs, vorzugsweise unter Verwendung eines Kits gemäß Anspruch 11 oder 12, das die folgenden Schritte aufweist:
a) Ausbildung einer Innenauflage (S1) in einem Rohr, wobei die Innenauflage eine mit der Innenwand des Rohrs in Kontakt stehende Gewebeschicht, die bevorzugt wassersundurchlässig ist, und eine innere Schicht, die einen Filzschlauch und eine Kunstharzmischung enthält, umfasst,
b) Einbringen eines textilen Schlauchs (S2) gemäß einem der Ansprüche 1 bis 9, der mit einem an der Kunstharzmischung nicht anhaftenden Trennmittel, vorzugsweise mit Silikon, beschichtet ist, in das Innere der Innenauflage (S1),
c) im Wesentlichen luftdichtes Abschließen des Textilschlauchs (S2),
d) Aufblasen des Textilschlauchs (S2),
e) dauerndes radiales Andrücken des Textilschlauchs (S2) und der Innenauflage (S1) an das Rohr,
f) Aushärtenlassen der aushärtbaren Kunstharzmischung,
g) Entfernen des Textilschlauchs (S2) aus dem Inneren der Innenauflage (S1).

14. Verfahren nach Anspruch 13, **dadurch gekennzeichnet, dass** der textile Schlauch (S2) während der Schritte f) und g) in seinem Inneren mit Wärme, Dampf, Licht oder Mikrowellen beaufschlagt wird.
